# EUROPEAN PATENT SPECIFICATION

(11) **EP 3 430 223 B1**
(45) Date of publication and mention of the grant of the patent: **22.01.2020**
(21) Application number: 17712251.2
(22) Date of filing: 15.03.2017
(51) Int. Cl.: E06B 3/22, E06B 3/263

(54) **FRAMEWORK FOR BUILDING WALLS OR THE LIKE**
GERÜST FÜR GEBÄUDEWÄNDE ODER DERGLEICHEN
OSSATURE POUR MURS DE BÂTIMENT OU STRUCTURES SIMILAIRES

(30) Priority: 16.03.2016 IT UA20161732
(43) Date of publication of application: 23.01.2019
(73) Proprietor: Graf Synergy S.r.l., 41015 Nonantola (MO) (IT)
(72) Inventor: VACCARI, Andrea, 41015 Nonantola (MO) (IT)
(74) Representative: Luppi, Emanuele
(86) International application number: PCT/IB2017/051496
(87) International publication number: WO 2017/158525

(56) References cited:
- WO-A2-2011/092100
- DE-U1-202013 102 513

## Description

### Technical Field

The present invention relates to a window or door framework for building walls or the like.

### Background Art

It is known to manufacture door and window frameworks, such as doors and windows made of plastic material, particularly PVC, which have high thermal and acoustic insulation performance, great resistance to atmospheric agents and external stresses, reduced environmental impact and low maintenance costs compared to frameworks made of different materials.

In the particular field of plastic frameworks, in order to ensure a high degree of thermal insulation it is known to manufacture the profiled elements of the frameworks with an inner geometry of the multi-chamber type.

Such geometry allows reducing the heat exchange between the inner environment and the external environment since the more the number of chambers inside the profiled element, the lower the formation of thermal bridges and thus the dispersion of heat.

The plastic frameworks of known type are susceptible to improvements to increase the thermal insulation between the inner environment and the external environment.

It follows therefore a reduction in energy consumption for maintaining heat in the interior environments and in the relevant environmental impact, so as to make, as a result, such frameworks more appealing for customers.

The document WO 2011/092100 A2 describes a window framework according to the preamble of claim 1.

### Description of the Invention

The main aim of the present invention is to provide a framework for building walls or the like which allows to maximize the efficiency of thermal insulation with a consequent reduction in energy consumption and relevant environmental impact for the heating and the cooling of rooms.

Another object of the present invention is to provide a framework for building walls or the like which allows to overcome the mentioned drawbacks of the prior art within the ambit of a simple, rational, easy and effective to use as well as affordable solution.

The above mentioned objects are achieved by the present framework for building walls or the like having the characteristics of claim 1.

### Brief Description of the Drawings

Other characteristics and advantages of the present invention will become more evident from the description of a preferred, but not exclusive embodiment of a framework for building walls or the like, illustrated by way of an indicative, but non-limiting, example in the accompanying drawings, wherein:

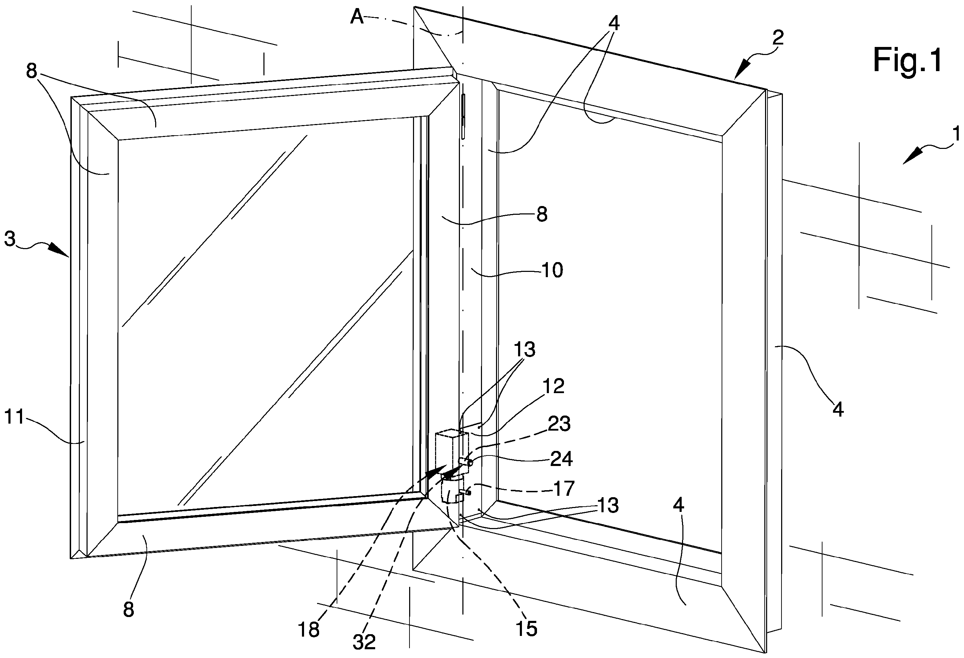

Figure 1 is an axonometric view of the framework according to the invention;

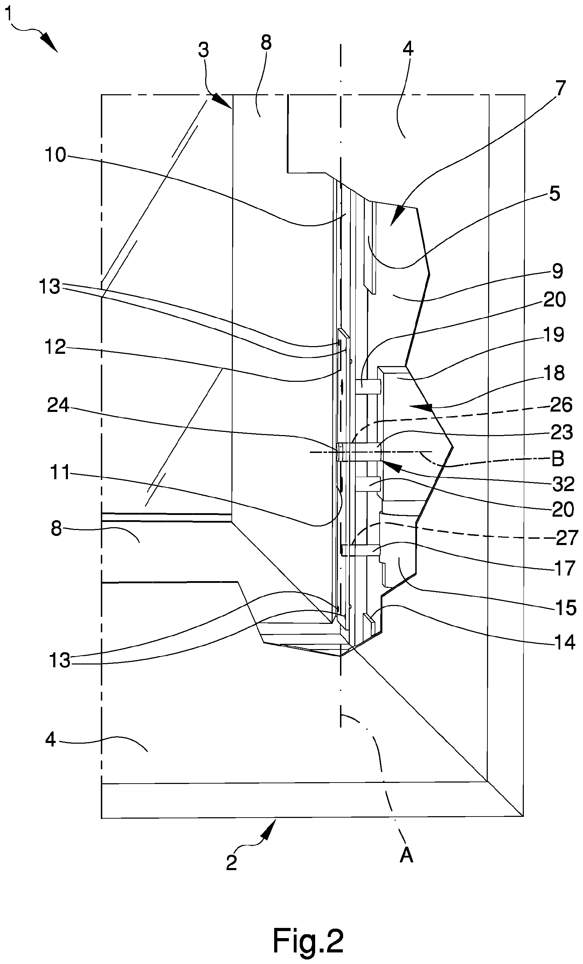

Figure 2 is a cutaway view of a detail of the framework according to the invention;

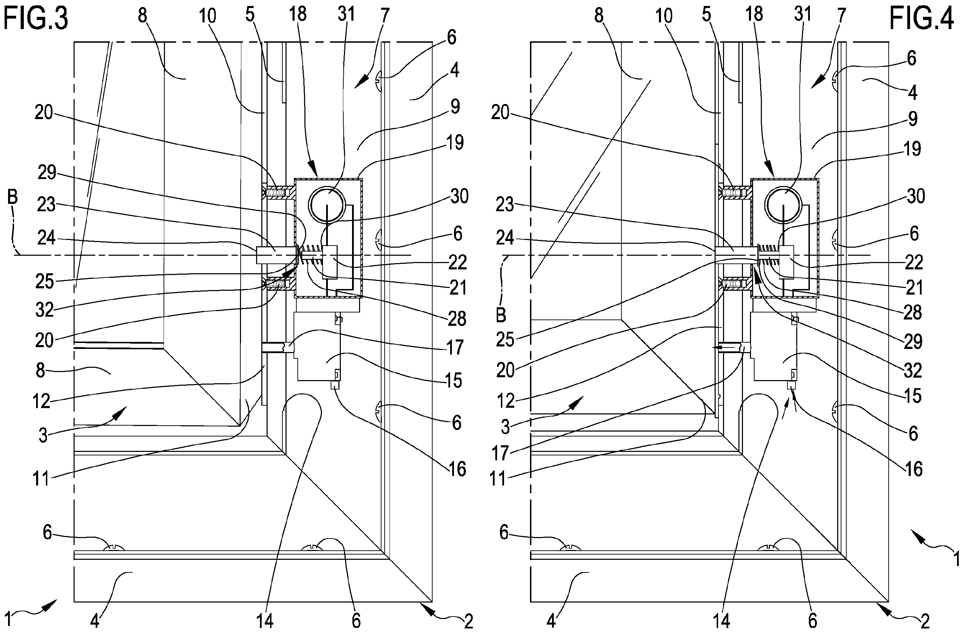

Figure 3 is a sectional view of a detail of the framework according to the invention in a first configuration;
Figure 4 is a sectional view of a detail of the framework according to the invention in a second configuration.

### Embodiments of the Invention

With particular reference to such figures, globally indicated with reference numeral 1 is a framework for building walls or the like.

The framework 1 comprises a frame 2, suitably shaped for the coating and the framing of an opening to shut formed on the outer walls of buildings, and a hinged element 3, hinged to the frame 2, the type of a window or a door having suitable dimensions for the closure of the opening to shut.

The frame 2 comprises a first profiled element 4 for each perimeter side of the opening to shut, wherein each first profiled element 4 has a substantially elongated profile and coincident with each perimeter side of the opening to be shut.

Each first profiled element 4 comprises an inner hollow portion in which is insertable a hollow reinforcing element 5 made of metallic material adapted to give greater rigidity and strength to the first profiled element itself.

The reinforcing element 5 has a tubular conformation with a substantially square cross section in which each wall of the reinforcing element 5 is adapted to adhere to a respective inner surface of the hollow portion.

The reinforcing element 5 is fixed to each first profiled element 4 by means of suitable fixing screws 6.

Each first profiled element 4 comprises a pair of head extremities, suitably cut at 45° in which each head extremity is welded to a head extremity of another of the first profiled elements 4 to define a right-angled portion of the frame 2.

By means of the welding of the first profiled elements 4, the relative hollow portions are joined together and define a main chamber 7 which extends for the entire length of the frame 2.

In the embodiment shown in the figures, the first profiled elements 4 are made, e.g., of PVC, but also heat-sealable plastic materials different to PVC cannot be ruled out.

The hinged element 3 is the type of a window, or a balcony door in the case of an accessing door to a room from the outside, having a second profiled element 8 for each side of the hinged element itself, in which each second profiled element 8 has a substantially elongated profile and coincident with each perimeter side of the hinged element 3.

Each second profiled element 8 is provided with the inner hollow portion in which is insertable the hollow reinforcing element 5 made of metallic material adapted to give greater rigidity and strength to the second profiled element itself.

Each reinforcing element 5 is fixed to each second profiled element 8 by means of the fixing screws 6.

Each of the second profiled elements 8 comprises a pair of head extremities, suitably cut at 45° in which each head extremity is welded to a head extremity of another of the second profiled elements 8 to define a right-angled portion of the hinged element 3.

By means of the welding of the second profiled elements 8, the relative hollow portions are joined together and define the main chamber 7 which extends for the entire length of the hinged element 3.

In the embodiment shown in the figures, similarly to the first profiled elements 4, the second profiled elements 8 are made of PVC, but also heat-sealable plastic materials different to PVC cannot be ruled out.

According to the invention, the framework 1 comprises a housing seat 9 adapted to house vacuum creating means 15, 18 within at least one of the frame 2 and the hinged element 3, and adapted to the expulsion of air from the inside the housing seat 9 of at least one of the frame 2 and the hinged element 3, depending on which of the two is housed.

The framework 1 comprises:
- a first contact surface 10, defined on at least one of the frame 2 and the hinged element 3, and on which are mounted the vacuum creating means 15, 18; and
- a second contact surface 11 defined on the other of the frame 2 and the hinged element 3.

The hinged element 3 is rotatable around an axis of hinging A with respect to the frame 2 and is movable between:
- an open configuration, wherein the first and second contact surface 10, 11 are moved away from one another; and
- a closed configuration, wherein the first and second contact surface 10, 11 are mutually approached.

In the particular embodiment shown in the figures, the first contact surface 10 is defined on the frame 2 and the second contact surface 11 is defined on the hinged element 3.

Specifically, the housing seat 9 is defined in an area of the main chamber 7 of the frame 2.

More in detail, the first contact surface 10 is defined on the surface of the frame 2 which, once installed on the perimeter of the opening to shut, remains visible. Similarly, the second contact surface 11 is defined on the surface of the hinged element 3 that remains visible.

Alternative embodiments cannot however be ruled out in which the housing seat 9 is defined inside the hinged element 3, the first contact surface 10 is defined on the hinged element 3 and the second contact surface 11 is defined on the frame 2.

In the particular embodiment shown in the figures, the first contact surface 10 comprises a removable portion 12 fixed to the first contact surface itself by means of suitable fixing elements 13 and coplanar to it in a fixing configuration. Usefully, the reinforcing element 5 arranged at the removable portion 12 comprises an opening 14 adapted to the insertion of the vacuum creating means 15, 18 inside the housing seat 9 defined in the main chamber 7.

The vacuum creating means 15, 18 comprise:
- a vacuum pump element 15 adapted to create and maintain the vacuum inside the frame 2. More in detail, the vacuum pump element 15 is the type of a compressor element adapted to the compression and expulsion of the air contained in the main chamber 7. The vacuum pump element 15 is provided with an air intake duct 16 contained in the main chamber 7 and with an air exhaust duct 17 outside the main chamber 7. The exhaust duct 17 comprises an axial extremity arranged substantially coplanar to the removable portion 12 and to the first contact surface 10;
- operating means 18 operatively connected to the vacuum pump element 15 and adapted to the creation and maintenance of the vacuum inside the frame 2.

The operating means 18 comprise a containment body 19 associated with the vacuum pump element 15 and provided with at least a support element 20 fixed, in turn, to the removable portion 12.

Preferably, the operating means 18 comprise a switch 21, moveably associated with the surface of the containment body 19, operatively connected to the vacuum pump element 15 by means of, e.g., suitable electronic control means 22.

Such electronic control means 22 may comprise at least a microprocessor or microcontroller for driving the operation of the vacuum pump 15.

Usefully, the vacuum creating means 15, 18 comprise activation means 32 operatively connected to the operating means 18 and adapted to activate the operating means 18 themselves in the closed configuration.

In a first embodiment shown in the figures, the activation means 32 comprise a pin element 23 provided with a first extremity 24 and a second extremity 25 opposite to the first extremity 24.

The pin element 23 has a substantially elongated conformation and is movable along a relative axis of movement B substantially coincident with the central axis of the pin element itself.

In the embodiment shown in the figures, the axis of movement B is substantially perpendicular to the axis of hinging A.

The removable portion 12 comprises a first hole 26 inside which is inserted and movable the pin element 23 along the axis of movement B.

The pin element 23 is inserted to measure with a slight interference inside the first hole 26 so that the pin element itself is movable along the axis of movement B without any friction with the surface of the first hole 26.

Usefully, the removable portion 12 comprises a second hole 27 adapted to the insertion of the exhaust duct 17 of the air contained inside the main chamber 7 and the space surrounding the main chamber itself.

The activation means 32 further comprise an elastic element 28 which extends along the axis of movement B and comprises a first extremal portion 29, arranged in contact with the second extremity 25, and a second extremal portion 30, opposite to the first extremal portion 29 and arranged in contact with the surface of the containment body 19 at the operating means 18.

In particular, the second extremal portion 30 is arranged in contact with the surface of the containment body 19 and surrounds the switch 21 so as not to come into contact with it.

More in detail, the elastic element 28 is movable along the axis of movement B between:
- an idle configuration, in which the first and the second extremal portion 29, 30 are moved away from one another along the axis of movement B; and
- an operating configuration, in which the first and the second extremal portion 29, 30 are mutually approached along the axis of movement B.

Preferably, the elastic element 28 is the type of a spring which in the idle configuration is not subjected to compression and maintains the second extremity 25 away from the operating means 18, while in the operating configuration, the elastic element 28 is subjected to compression and the second extremity 25 comes into contact with the operating means 18.

In this first embodiment, the activation means 32 are operable between:
- a first configuration, in which, in the closed configuration, the first extremity 24 enters into contact with the second contact surface 11 and the second extremity 25 enters into contact with the operating means 18. More particularly, the pin element 23 is movable inside the first hole 26 towards the containment body 19 along the axis of movement B. During the juxtaposition of the hinged element 3 to the frame 2, the second contact surface 11 first enters into contact with the second extremity 25 and during the tight-sealed closing phase of the hinged element 3 to the frame 2, in which the second contact surface 11 gradually approaches the first contact surface 10 up to the full contact between them, the second contact surface 11 first enters into contact with the second extremity 25 and gradually the pin element 23 and the elastic element 28 are movable along the axis of movement B. Even more in detail, the movement of the pin element 23 causes the elastic element 28 switching from the idle configuration to the operating configuration since the second extremity 25 and the first extremity 24 are movable simultaneously along the axis of movement B towards the containment body 19. In particular, with a complete tight-sealed contact between the first contact surface 10 and the second contact surface 11, the second extremity 25 is arranged in contact with the operating means 18 and the pin element 23 is inserted retractable inside the second profiled element 8 of the frame 2. In other words, the first extremity 24 is substantially coplanar to the first contact surface 10; and
- a second configuration, in which, in the open configuration, the first extremity 24 is moved away from the second contact surface 11 and the second extremity 25 is moved away from the operating means 18. In this second configuration, the elastic element 28 is in the idle configuration and the second extremity 25 and the first extremal portion 29 are arranged in contact with each other, but both the pin element 23 and the elastic element 28 are not movable along the axis of movement B. In this regard, the first extremity 24 is substantially protruding from the first hole 26 with respect to the first contact surface 10.

In a second alternative embodiment, not shown in the figures, the activation means 32 are the type of magnetic contact means and comprise:
- a first magnetic element fixed to the second contact surface 11; and
- a second element sensitive to the magnetic field generated by the first magnetic element and fixed to the first contact surface 10.

The first magnetic element and the second sensitive element are adapted to operate in conjunction with each other in the closed configuration.

More in detail, the first magnetic element can be, e.g., a permanent magnet or a body made of a conductive material that, crossed by an electric current, generates a magnetic field.

This first magnetic element can be associated with the second contact surface 11 by suitable adhesive means, or can be fixed inside a suitable fixing seat formed on the second contact surface itself by the adhesive means.

The second sensitive element can be, e.g., a permanent magnet having the same polarity of the first magnetic element so as to generate a force of repulsion between the first magnetic element and the second sensitive element in the closed configuration.

Usefully, the first contact surface 10 is provided with a guiding unit for moving the second sensitive element along the axis of movement B.

In particular, the guiding unit extends inside the housing seat 9 starting from the first hole 26 in the space defined between the first contact surface 10 and the containment body 19.

The second sensitive element is inserted and movable inside the first hole 26 and along the guiding unit.

In the closed configuration, the second sensitive element is movable along the axis of movement B towards the switch 21 by means of the force of repulsion between the first magnetic element and the second sensitive element itself.

Usefully, in this second embodiment, the activation means 32 comprise return means operatively connected to the second sensitive element and to the first contact surface 10 and adapted to return the second sensitive element itself to the first hole 26 in the switching operation between the closed configuration and the open configuration.

It cannot be ruled out that the second sensitive element can be an electric circuit, provided with at least a solenoid inductor element or the like, operatively connected to the operating means 18.

More in detail, the second sensitive element can be operatively connected directly to the switch 21 and, by means of the magnetic field induced by the first magnetic element in the closed configuration, supplies electric current to the operating means themselves which in turn is supplied to the vacuum pump element 15 by means of the electronic control means 22.

In a first particular embodiment shown in the figures, the operating means 18 comprise electric motor means that are actuated by the switch 21 and are operatively connected to the vacuum pump element 15.

Regardless of the embodiment of the activation means 32, the switch 21 is activated by activation means themselves in the first configuration.

The electric motor means are operatively connected to the electronic control means 22 for the transfer of an activation signal, generated by the electric motor means themselves, to the vacuum pump element 15.

Usefully, the operating means 18 comprise a power supply unit 31 operatively connected to the electric motor means and adapted to supply a power signal to the electric motor means themselves.

The power supply unit 31 can be selected from cells or batteries, of the rechargeable or replaceable type.

In case the power supply unit 31 is of the rechargeable type, at least one photovoltaic cell can be provided associated with the first contact surface 10 and operatively connected to the power supply unit itself.

In the particular embodiment shown in the figures, the power supply unit 31 is fixed to the containment body 19 and housed inside the housing seat 9.

It cannot be ruled out alternatively that the frame 2 can comprise a containment seat of the power supply unit 31 which is separated from the housing seat 9.

More in detail, such a containment seat is defined at the first contact surface 10 and is provided with an access flap to the containment seat itself.

Usefully, the containment seat is isolated from the main chamber 7 to allow maintaining the vacuum created inside the main chamber itself and to simplify the access operations to the power supply unit 31 because, once the vacuum is created, and therefore reduced the air pressure contained in the main chamber 7, the force of attraction of the flap surface to the first contact surface 10 would be very high and would require a huge physical effort by the operator for its opening.

It is stressed that the presence of the containment seat separated from the housing seat 9 causes the replacement operations of the power supply unit 31 by the operator, e.g. during the periodical charging operations, proving comfortable and easy and, also, do not involve the extraction of the vacuum creating means 15, 18 from the relative housing seat 9.

A second alternative embodiment cannot however be ruled out in which the operating means 18 comprise a mechanical operating system operatively connected to the vacuum pump element 15 and adapted to cooperate with the activation means 32.

More in detail, the activation means 32 are adapted to move the mechanical operating system which in turn activates the vacuum pump element 15 for the expulsion of the air contained inside the main chamber 7 through the exhaust duct 17.

A third alternative embodiment cannot also be ruled in which the operating means 18 are of the hybrid type and comprise an energy harvesting element, operatively connected to the activation means 32, adapted to convert the mechanical energy, provided by the movement of the pin element 23 (or of the second sensitive element) along the axis of movement B in the passage from the open configuration to the closed configuration, into electric energy which is supplied in turn to the vacuum pump element 15, which sucks the air contained in the main chamber 7 and expels it by means of the exhaust duct 17 through the second hole 27.

As part of this discussion, by energy harvesting element is meant a special device adapted for the harvesting and conversion of the energy supplied by the opening and closing of the hinged element 3, during the switching operation between the open configuration and the closed configuration and vice versa, into electric energy which is directly usable.

More in detail, the energy harvesting element can be the type of piezoelectric crystals or particular polymers which, when subjected to mechanical deformation applied by the mechanical action of opening/closure of the hinged element 3 with respect to the frame 2, supplies electric potentials.

In other words, the mechanical action of the activation means 32 in the switching operation between the open configuration and the closed configuration applies a mechanical deformation to the piezoelectric crystals, which in turn generate electric potentials which are adapted to the activation of the vacuum pump element 15.

Alternatively, the energy harvesting element can be the type of one or more photovoltaic cells, commonly used for example as part of pocket calculators, fixed on the first contact surface 10 and adapted to capture sunlight during the transition between the open configuration and the closed configuration and vice versa.

In conjunction with the closed configuration, solar energy, converted into electric energy by the photovoltaic cells during the open configuration, is transmitted to the electronic control means 22 following the contact between the pin element 23 (or the second sensitive element in the second embodiment) and the switch 21 for the activation of the vacuum pump element 15.

Even alternatively, the energy harvesting element can be a dynamo element adapted to convert the mechanical energy provided by the movement of the pin element 23 (or of the second sensitive element), operatively connected to the dynamo element itself, into electric energy for the operation of the vacuum pump element 15.

In a first operating solution of the vacuum creating means 15, 18, in the first configuration the operating means 18 are activated by the activation means 32 and the vacuum pump element 15 is disabled.

In this first operating solution, the activation means 32 activate the operating means 18, but to each activation does not correspond a relative activation of the vacuum pump element 15.

With reference to the particular embodiment shown in the figures, to each movement of the pin element 23 movable along the axis of movement B does not correspond a relative operation of the vacuum pump element 15.

In other words, the pin element 23 activates the operating means 18 which accumulate the mechanical force applied by the movement of the pin element itself and such accumulated force is released to the vacuum pump element 15 in conjunction with a predefined number of successive switching operations between the open configuration and the closed configuration and vice versa.

As regards the first embodiment, the electronic control means 22 are suitably configured so that at each switching operation of the activation means 32, from the first configuration to the second configuration and vice versa, the activation of the vacuum pump element 15 takes place following a predefined number of pressures of the switch 21 by means of the movement of the pin element 23.

More in detail, the electric motor means supply the electric energy for supplying and operating the vacuum pump element 15 following the predefined number of pressures of the switch 21.

With reference to the second embodiment, the mechanical force supplied by the movement of the pin element 23, and consequently of the mechanical operating system, is transferred to the vacuum pump element 15, which is activated following a predefined number of switching operations between the first and the second configuration and vice versa.

Finally, concerning the third embodiment, the mechanical force, due to the transition between the open configuration and the closed configuration, is converted into electric energy by the energy harvesting element.

The energy harvesting element accumulates such converted electric energy at each switching operation between the first and the second configuration and releases it to the vacuum pump element 15 following a predefined number of switching operations between the first and the second configuration.

Usefully, such a predefined number of switching operations is preset in the electronic control means 22 which are adapted to transmit electric energy only following the predefined and preset number of switching operations between the first and the second configuration.

To each activation of the vacuum pump element 15 corresponds the complete expulsion of the air contained inside the main chamber 7 and the area around the main chamber itself.

In a second operating solution of the vacuum creating means 15, 18, in the first configuration, the operating means 18 are activated by the activation means 32 and the vacuum pump element 15 is enabled.

In other words, the mechanical force due to the transition between the open configuration and the closed configuration and, more in detail, in the particular embodiment shown in the figures, the movement of the pin element 23 along the axis of movement B during such transition activates the operating means 18, which operate the vacuum pump element 15 instantaneously, with the relative expulsion of the air contained inside the main chamber 7.

The expulsion of the air contained in the main chamber 7 by means of the vacuum creating means 15, 18 causes the coefficient of thermal conductivity of the frame 2 being comprised between 0.4 W/K and 0.6 W/K.

More precisely, at each activation of the vacuum pump element 15, the frame 2 has a coefficient of thermal conductivity substantially equal to 0.5 W/K.

Similarly, in an alternative embodiment in which the vacuum creating means 15, 18 are arranged at the hinged element 3, the hinged element itself has a coefficient of thermal conductivity substantially equal to 0.5 W/K.

It has in practice been found that the described invention achieves the intended objects and in particular the fact is stressed that the framework thus made allows maximizing the efficiency of thermal insulation provided by the framework itself with respect to known plastic frameworks.

Advantageously, the installation of these frameworks allows reducing energy consumption and environmental impact for the heating and cooling of rooms.

## Claims

1. A window or door framework (1) for building walls or the like, comprising at least a frame (2) and at least a hinged element (3) hinged to said frame (2), further comprising
- at least a housing seat (9) adapted to house vacuum creating means (15, 18)
within at least one of said frame (2) and said hinged element (3); said vacuum creating means (15,18) being adapted to the expulsion of air from the inside of at least one of said frame (2) and said hinged element (3); **characterized in that**
- said vacuum creating means (15,18) are housed in said housing seat (9).

2. A window or door framework (1) according to claim 1, **characterized in that** said vacuum creating means (15, 18) comprise:
- at least a vacuum pump element (15);
- operating means (18) operatively connected to said vacuum pump element (15).

3. A window or door framework (1) according to one or more of the preceding claims, **characterized in that** it comprises:
- at least a first contact surface (10) defined on at least one of said frame (2) and said hinged element (3) and on which are mounted said vacuum creating means (15, 18); and
- at least a second contact surface (11) defined on the other of said frame (2) and said hinged element (3);
said hinged element (3) being rotatable around an axis of hinging (A) with respect to said frame (2) and movable between:
- an open configuration, wherein said first and second contact surface (10, 11) are moved away from one another; and
- a closed configuration, wherein said first and second contact surface (10, 11) are mutually approached.

4. A window or door framework (1) according to one or more of the preceding claims, **characterized in that** said vacuum creating means (15, 18) comprise activation means (32) operatively connected to said operating means (18) and adapted to activate said operating means (18) in said closed configuration.

5. A window or door framework (1) according to one or more of the preceding claims, **characterized in that** said activation means (32) comprise:
- at least a pin element (23) comprising a first extremity (24) and a second extremity (25) opposite to said first extremity (24), said pin element (23) being movable along a corresponding axis of movement (B);
- at least an elastic element (28) comprising a first extremal portion (29), arranged in contact with said second extremity (25), and a second extremal portion (30), opposite to said first extremal portion (29) and arranged in contact with said operating means (18), said elastic element (28) being movable along said axis of movement (B) between:
- an idle configuration, wherein said first and second extremal portion (29, 30) are moved away from one another; and
- an operating configuration, wherein said first and second extremal portion (29, 30) are mutually approached.

6. A window or door framework (1) according to one or more of the preceding claims, **characterized in that** said axis of movement (B) is substantially perpendicular to said axis of hinging (A).

7. A window or door framework (1) according to one or more of the preceding claims, **characterized in that** said pin element (23) and said elastic element (28) are operable between:
- a first configuration, wherein, in said closed configuration, said first extremity (24) enters into contact with said second contact surface (11) and said second extremity (25) enters into contact with said operating means (18), said first extremity (24) being substantially coplanar to said first contact surface (10); and
- a second configuration, wherein, in said open configuration, said first extremity (24) is moved away from said second contact surface (11) and said second extremity (25) is moved away from said operating means (18), said first extremity (24) being substantially protruding from at least a first hole (26) with respect to said first contact surface (10).

8. A window or door framework according to one or more of claims 1 to 4, **characterized in that** said activation means (32) comprise:
- at least a first magnetic element arranged at said second contact surface (11); and
- at least a second element sensitive to the magnetic field generated by said first magnetic element, said second sensitive element being arranged at said first contact surface (10);
said first magnetic element and said second sensitive element being adapted to cooperate with one another in said closed configuration.

9. A window or door framework (1) according to one or more of the preceding claims, **characterized in that** said first contact surface (10) comprises at least a first hole (26) inside which at least one of said pin element (23) and said second sensitive element is movable along said axis of movement (B).

10. A window or door framework (1) according to one or more of the preceding claims, **characterized in that** said first contact surface (10) comprises at least a second hole (27) for the expulsion of the air contained within at least one of said frame (2) and said hinged element (3) by means of said vacuum pump element (15).

11. A window or door framework (1) according to one or more of the preceding claims, **characterized in that** said operating means (18) comprise electric motor means operatively connected to said vacuum pump element (15) and activated by said activation means (32).

12. A window or door framework (1) according to one or more of claims 1 to 10, **characterized in that** said operating means (18) comprise at least a mechanical operating system operatively connected to said vacuum pump element (15) and adapted to cooperate with said activation means (32).

13. A window or door framework (1) according to one or more of claims 1 to 10, **characterized in that** said operating means (18) comprise at least an energy harvesting element which can be activated by said activation means (32) during the switching operation between said open configuration and said closed configuration and operatively connected to said vacuum pump element (15).

14. A window or door framework (1) according to one or more of the preceding claims, **characterized in that**, in said first configuration, said operating means (18) are activated by said activation means (32) and said vacuum pump element (15) is disabled.

15. A window or door framework (1) according to one or more of claims 1 to 13, **characterized in that**, in said first configuration, said operating means (18) are activated by said activation means (32) and said vacuum pump element (15) is enabled.

## Patentansprüche

1. Fenster- oder Türrahmen (1) für Gebäudewände oder dergleichen, umfassend mindestens einen Rahmen (2) und mindestens ein an dem Rahmen (2) angelenktes Gelenkelement (3), ferner umfassend
- mindestens einen Gehäusesitz (9), der geeignet ist, um Vakuumerzeugungsmittel (15, 18) in mindestens einem von dem Rahmen (2) und dem Gelenkelement (3) aufzunehmen; wobei die Vakuumerzeugungsmittel (15, 18) geeignet sind, um Luft aus der Innenseite von mindestens einem des Rahmens (2) und des Gelenkelements (3) auszutreiben; **dadurch gekennzeichnet, dass**
- die Vakuumerzeugungsmittel (15, 18) in dem Gehäusesitz (9) untergebracht sind.

2. Fenster- oder Türrahmen (1) nach Anspruch 1, **dadurch gekennzeichnet, dass** die Vakuumerzeugungsmittel (15, 18) umfassen:
- mindestens ein Vakuumpumpenelement (15);
- Betriebsmittel (18), die funktionsfähig mit dem Vakuumpumpenelement (15) verbunden sind.

3. Fenster- oder Türrahmen (1) nach einem oder mehreren der vorstehenden Ansprüche, **dadurch gekennzeichnet, dass** er umfasst:
- mindestens eine erste Kontaktfläche (10), die auf mindestens einem von dem Rahmen (2) und dem Gelenkelement (3) definiert ist und auf der die Vakuumerzeugungsmittel (15, 18) montiert sind; und
- mindestens eine zweite Kontaktfläche (11), die auf dem anderen von dem Rahmen (2) und dem Gelenkelement (3) definiert ist;
wobei das Gelenkelement (3) um eine Scharnierachse (A) in Bezug auf den Rahmen (2) drehbar und beweglich ist zwischen:
- einer offenen Konfiguration, wobei die erste und zweite Kontaktfläche (10, 11) voneinander wegbewegt werden; und
- einer geschlossenen Konfiguration, wobei die erste und zweite Kontaktfläche (10, 11) einander angenähert werden.

4. Fenster- oder Türrahmen (1) gemäß einem oder mehreren der vorhergehenden Ansprüche, **dadurch gekennzeichnet, dass** die Vakuumerzeugungsmittel (15, 18) Aktivierungsmittel (32) umfassen, die funktionsfähig mit den Betriebsmitteln (18) verbunden und geeignet sind, die Betriebsmittel (18) in der geschlossenen Konfiguration zu aktivieren.

5. Fenster- oder Türrahmen (1) nach einem oder mehreren der vorstehenden Ansprüche, **dadurch gekennzeichnet, dass** die Aktivierungsmittel (32) umfassen:
- mindestens ein Stiftelement (23), das ein erstes Ende (24) und ein zweites Ende (25) gegenüber dem ersten Ende (24) umfasst, wobei das Stiftelement (23) entlang einer entsprechenden Bewegungsachse (B) beweglich ist;
- mindestens ein elastisches Element (28), umfassend einen ersten Endbereich (29), der in Kontakt mit dem zweiten Ende (25) angeordnet ist, und einen zweiten Endbereich (30), der dem ersten Endbereich (29) gegenüberliegt und in Kontakt mit den Betriebsmitteln (18) angeordnet ist, wobei das elastische Element (28) entlang der Bewegungsachse (B) beweglich ist zwischen:
- eine Leerlaufkonfiguration, wobei der erste und zweite Endbereich (29, 30) voneinander wegbewegt werden; und
- eine Betriebskonfiguration, wobei der erste und zweite Endbereich (29, 30) einander angenähert werden.

6. Fenster- oder Türrahmen (1) nach einem oder mehreren der vorstehenden Ansprüche, **dadurch gekennzeichnet, dass** die Bewegungsachse (B) im Wesentlichen senkrecht zu der Scharnierachse (A) ist.

7. Fenster- oder Türrahmen (1) nach einem oder mehreren der vorstehenden Ansprüche, **dadurch gekennzeichnet, dass** das Stiftelement (23) und das elastische Element (28) betreibbar sind zwischen:
- einer ersten Konfiguration, wobei in der geschlossenen Konfiguration das erste Ende (24) mit der zweiten Kontaktfläche (11) und das zweite Ende (25) mit den Betriebsmitteln (18) in Kontakt kommt, wobei das erste Ende (24) im Wesentlichen koplanar zu der ersten Kontaktfläche (10) ist; und
- einer zweiten Konfiguration, wobei in der offenen Konfiguration das erste Ende (24) von der zweiten Kontaktfläche (11) und das zweite Ende (25) von den Betriebsmitteln (18) wegbewegt wird, wobei das erste Ende (24) im Wesentlichen aus mindestens einem ersten Loch (26) in Bezug auf die erste Kontaktfläche (10) herausragt.

8. Fenster- oder Türrahmen nach einem oder mehreren der Ansprüche 1 bis 4, **dadurch gekennzeichnet, dass** die Aktivierungsmittel (32) umfassen:
- mindestens ein erstes Magnetelement, das an der zweiten Kontaktfläche (11) angeordnet ist; und
- mindestens ein zweites Element, das für das durch das erste Magnetelement erzeugte Magnetfeld empfindlich ist, wobei das zweite empfindliche Element an der ersten Kontaktfläche (10) angeordnet ist;
wobei das erste magnetische Element und das zweite empfindliche Element geeignet sind, um in der geschlossenen Konfiguration miteinander zusammenzuwirken.

9. Fenster- oder Türrahmen (1) nach einem oder mehreren der vorhergehenden Ansprüche, **dadurch gekennzeichnet, dass** die erste Kontaktfläche (10) mindestens ein erstes Loch (26) umfasst, in dem mindestens eines von dem Stiftelemente (23) und dem zweiten empfindlichen Element entlang der Bewegungsachse (B) beweglich ist.

10. Fenster- oder Türrahmen (1) nach einem oder mehreren der vorstehenden Ansprüche, **dadurch gekennzeichnet, dass** die erste Kontaktfläche (10) mindestens ein zweites Loch (27) zum Ausstoßen der in mindestens einem von dem Rahmen (2) und dem Gelenkelement (3) enthaltenen Luft mittels des Vakuumpumpenelements (15) umfasst.

11. Fenster- oder Türrahmen (1) nach einem oder mehreren der vorstehenden Ansprüche, **dadurch gekennzeichnet, dass** die Betriebsmittel (18) Elektromotoreinrichtungen umfassen, die funktionsfähig mit dem Vakuumpumpenelement (15) verbunden und durch die Aktivierungsmittel (32) aktiviert sind.

12. Fenster- oder Türrahmen (1) nach einem oder mehreren der Ansprüche 1 bis 10, **dadurch gekennzeichnet, dass** die Betriebsmittel (18) mindestens ein mechanisches Betriebssystem umfassen, das funktionsfähig mit dem Vakuumpumpenelement (15) verbunden und geeignet ist, mit den Aktivierungsmitteln (32) zusammenzuwirken.

13. Fenster- oder Türrahmen (1) nach einem oder mehreren der Ansprüche 1 bis 10, **dadurch gekennzeichnet, dass** die Betriebsmittel (18) mindestens ein Energiegewinnungselement umfassen, das durch die Aktivierungsmittel (32) während des Schaltvorgangs zwischen der offenen Konfiguration und der geschlossenen Konfiguration aktiviert und funktionsfähig mit dem Vakuumpumpenelement (15) verbunden werden kann.

14. Fenster- oder Türrahmen (1) nach einem oder mehreren der vorhergehenden Ansprüche, **dadurch gekennzeichnet, dass** in der ersten Konfiguration die Betriebsmittel (18) durch die Aktivierungsmittel (32) aktiviert sind und das Vakuumpumpenelement (15) deaktiviert ist.

15. Fenster- oder Türrahmen (1) nach einem oder mehreren der Ansprüche 1 bis 13, **dadurch gekennzeichnet, dass** in der ersten Konfiguration die Betriebsmittel (18) durch die Aktivierungsmittel (32) aktiviert sind und das Vakuumpumpenelement (15) aktiviert wird.

## Revendications

1. Bâti de fenêtre ou de porte (1) pour des murs de bâtiment ou similaires, comprenant au moins un cadre (2) et au moins un élément articulé (3) articulé sur ledit cadre (2), comprenant en outre
- au moins un siège de logement (9) adapté pour loger des moyens de création de vide (15, 18) au sein d'au moins l'un dudit cadre (2) et dudit élément articulé (3), lesdits moyens de création de vide (15, 18) étant adaptés pour l'expulsion d'air depuis l'intérieur d'au moins l'un dudit cadre (2) et dudit élément articulé (3) ;
**caractérisé en ce que**
lesdits moyens de création de vide (15, 18) sont logés dans ledit siège de logement (9).

2. Bâti de fenêtre ou de porte (1) selon la revendication 1, **caractérisé en ce que** lesdits moyens de création de vide (15, 18) comprennent :
- au moins un élément de pompe à vide (15) ;
- des moyens de fonctionnement (18) raccordés fonctionnellement audit élément de pompe à vide (15).

3. Bâti de fenêtre ou de porte (1) selon l'une ou plusieurs des revendications précédentes, **caractérisé en ce qu'**il comprend :
- au moins une première surface de contact (10) définie sur au moins l'un dudit cadre (2) et dudit élément articulé (3) et sur laquelle sont montés lesdits moyens de création de vide (15, 18) ; et
- au moins une seconde surface de contact (11) définie sur l'autre dudit cadre (2) et dudit élément articulé (3) ;
ledit élément articulé (3) pouvant tourner autour d'un axe d'articulation (A) par rapport audit cadre (2) et étant mobile entre :
- une configuration ouverte, dans laquelle lesdites première et seconde surfaces de contact (10, 11) sont éloignées l'une de l'autre ; et
- une configuration fermée, dans laquelle lesdites première et seconde surfaces de contact (10, 11) sont rapprochées mutuellement.

4. Bâti de fenêtre ou de porte (1) selon l'une ou plusieurs des revendications précédentes, **caractérisé en ce que** lesdits moyens de création de vide (15, 18) comprennent des moyens d'activation (32) raccordés fonctionnellement auxdits moyens de fonctionnement (18) et adaptés pour activer lesdits moyens de fonctionnement (18) dans ladite configuration fermée.

5. Bâti de fenêtre ou de porte (1) selon l'une ou plusieurs des revendications précédentes, **caractérisé en ce que** lesdits moyens d'activation (32) comprennent :
- au moins un élément de goupille (23) comprenant une première extrémité (24) et une seconde extrémité (25) opposée à ladite première extrémité (24), ledit élément de goupille (23) étant mobile selon un axe de déplacement (B) correspondant ;
- au moins un élément élastique (28) comprenant une première portion extrême (29), agencée en contact avec ladite seconde extrémité (25), et une seconde portion extrême (30), opposée à ladite première portion extrême (29) et agencée en contact avec lesdits moyens de fonctionnement (18), ledit élément élastique (28) étant mobile selon ledit axe de déplacement (B) entre :
- une configuration de repos, dans laquelle lesdites première et seconde portions extrêmes (29, 30) sont éloignées l'une de l'autre ; et
- une configuration de fonctionnement, dans laquelle lesdites première et seconde portions extrêmes (29, 30) sont rapprochées mutuellement.

6. Bâti de fenêtre ou de porte (1) selon l'une ou plusieurs des revendications précédentes, **caractérisé en ce que** ledit axe de déplacement (B) est sensiblement perpendiculaire audit axe d'articulation (A).

7. Bâti de fenêtre ou de porte (1) selon l'une ou plusieurs des revendications précédentes, **caractérisé en ce que** ledit élément de goupille (23) et ledit élément élastique (28) sont aptes à un fonctionnement entre :
- une première configuration, dans laquelle, dans ladite configuration fermée, ladite première extrémité (24) entre en contact avec ladite seconde surface de contact (11) et ladite seconde extrémité (25) entre en contact avec lesdits moyens de fonctionnement (18), ladite première extrémité (24) étant sensiblement coplanaire à ladite première surface de contact (10) ; et
- une seconde configuration, dans laquelle, dans ladite configuration ouverte, ladite première extrémité (24) est éloignée de ladite seconde surface de contact (11) et ladite seconde extrémité (25) est éloignée desdits moyens de fonctionnement (18), ladite première extrémité (24) dépassant sensiblement d'au moins un premier trou (26) par rapport à ladite première surface de contact (10).

8. Bâti de fenêtre ou de porte selon l'une ou plusieurs des revendications 1 à 4, **caractérisé en ce que** lesdits moyens d'activation (32) comprennent :
- au moins un premier élément magnétique agencé au niveau de ladite seconde surface de contact (11) ; et
- au moins un second élément sensible au champ magnétique généré par ledit premier élément magnétique, ledit second élément sensible étant agencé au niveau de ladite première surface de contact (10) ;
ledit premier élément magnétique et ledit second élément sensible étant adaptés pour coopérer l'un avec l'autre dans ladite configuration fermée.

9. Bâti de fenêtre ou de porte (1) selon l'une ou plusieurs des revendications précédentes, **caractérisé en ce que** ladite première surface de contact (10) comprend au moins un premier trou (26) à l'intérieur duquel au moins l'un dudit élément de goupille (23) et dudit second élément sensible est mobile selon ledit axe de déplacement (B).

10. Bâti de fenêtre ou de porte (1) selon l'une ou plusieurs des revendications précédentes, **caractérisé en ce que** ladite première surface de contact (10) comprend au moins un second trou (27) pour l'expulsion de l'air contenu au sein d'au moins l'un dudit cadre (2) et dudit élément articulé (3) au moyen dudit élément de pompe à vide (15).

11. Bâti de fenêtre ou de porte (1) selon l'une ou plusieurs des revendications précédentes, **caractérisé en ce que** lesdits moyens de fonctionnement (18) comprennent des moyens de moteur électrique raccordés fonctionnellement audit élément de pompe à vide (15) et activés par lesdits moyens d'activation (32).

12. Bâti de fenêtre ou de porte (1) selon l'une ou plusieurs des revendications 1 à 10, **caractérisé en ce que** lesdits moyens de fonctionnement (18) comprennent au moins un système de fonctionnement mécanique raccordé fonctionnellement audit élément de pompe à vide (15) et adapté pour coopérer avec lesdits moyens d'activation (32).

13. Bâti de fenêtre ou de porte (1) selon l'une ou plusieurs des revendications 1 à 10, **caractérisé en ce que** lesdits moyens de fonctionnement (18) comprennent au moins un élément de récupération d'énergie qui peut être activé par lesdits moyens d'activation (32) pendant l'opération de changement entre ladite configuration ouverte et ladite configuration fermée et raccordé fonctionnellement audit élément de pompe à vide (15).

14. Bâti de fenêtre ou de porte (1) selon l'une ou plusieurs des revendications précédentes, **caractérisé en ce que**, dans ladite première configuration, lesdits moyens de fonctionnement (18) sont activés par lesdits moyens d'activation (32) et ledit élément de pompe à vide (15) est mis en arrêt.

15. Bâti de fenêtre ou de porte (1) selon l'une ou plusieurs des revendications 1 à 13, **caractérisé en ce que**, dans ladite première configuration, lesdits moyens de fonctionnement (18) sont activés par lesdits moyens d'activation (32) et ledit élément de pompe à vide (15) est mis en marche.
